# EUROPEAN PATENT APPLICATION

(11) **EP 4 556 403 A1**
(43) Date of publication of application: **21.05.2025**
(21) Application number: 23306987.1
(22) Date of filing: 16.11.2023
(51) Int. Cl.: B65G 1/04

(54) **MAINTENANCE VEHICLE FOR A STORAGE AND RETRIEVAL SYSTEM**

(71) Applicant: Exotec Product France, 59170 Croix (FR)
(72) Inventor: Ballester Gómez, José Ramón, 85356 FREISING (DE); IGLA, Victor, 59178 HASNON (FR)
(74) Representative: Plasseraud IP

(57) **Abstract**

The present disclosure relates to a maintenance vehicle (10) for a storage and retrieval system comprising storage racks arranged so as to form at least one circulation aisle between two respective storage racks, the storage racks comprising vertical uprights,
wherein the maintenance vehicle (10) comprises :
- a chassis (11) able to move on a floor in the at least one circulation aisle,
- a platform (12) coupled to the chassis (11) and intended to receive an operator,
- a guardrail (13) mounted on the platform (12),
- an ascent and descent system (14) comprising an engagement member configured to cooperate with the uprights facing the respective circulation aisle so as to drive the ascent and descent of the maintenance vehicle (10) in a vertical direction.

## Description

### Field of the invention

The present disclosure relates to the field of maintenance for storage and retrieval systems in warehouses, in particular for automated storage and retrieval systems, also designated ASRS. More particularly, the present disclosure relates to a maintenance vehicle for such a storage and retrieval system.

### Background of the invention

In the field of logistics, it is well known to build storage and retrieval systems for articles, for example in warehouses, which are compact and extend in height in order to optimize the available storage space. Such a storage and retrieval system typically comprises compactly arranged storage racks and circulation aisles serving both sides of the storage racks. The storage racks are designed to receive and store articles, and to this end define, within their structure, consecutive columns of cells, each cell defining a storage location. These cells are designed to receive bins, trays or, more generally, receptacles, in which articles are placed and stored. These articles are then combined to form orders to be shipped.

Some of the storage and retrieval systems, known as ASRS, use automated guided vehicles, also referred to as AGVs, configured to place and remove articles from said storage racks. AGVs are robots that move autonomously without human intervention. AGVs can, for example, move in at least one or both directions along a horizontal surface, typically the warehouse floor. AGVs can also move vertically by climbing over the storage racks. Such storage and retrieval systems are disclosed in particular by the document WO 2019/072432. For this purpose, AGVs typically comprise climbing means such as motorized gear wheels meshing with a climbing element (typically a gear rack or a roller chain) arranged over the height of a rack upright.

From time to time, an AGV gets stuck in the rack, particularly at a certain height, and needs to be repaired. This may be due to a breakdown, a collision with another AGV, a stabilization fault in the rack, or a problem related to the AGV's vertical movement on the rack. These troubleshooting or maintenance operations are essential, not only for the immobilized AGV, but also possibly for the other AGVs whose routes are impacted by the immobilization of the vehicle in question. Such operations can be time-consuming and costly, but also dangerous for the operators involved, especially if they have to be carried out at great heights in the rack.

In this case, a mobile aerial work platform is used, comprising an extendable structure mounted on a self-propelled or a non-self-propelled support frame, to position a work platform at a height where an operator can work, in particular to carry out maintenance work at a height. The extendable structure is formed, for example, by articulated and/or telescopic arms. Such mobile aerial work platforms have the advantage of being flexible and can be moved easily from one circulation aisle to another. However, these mobile aerial work platforms cannot be used to reach great heights in the context of a compact storage and retrieval system, unless they are stabilized by bulky means (in terms of weight and/or footprint), which in turn impacts the basic flexibility offered by this type of mobile aerial work platform.

Also known from documents FR 2 919 591 B1 or DD 252 815 A1 is an elevator installed in each of the circulation aisles and used both for raising and lowering articles to enable them to be placed in and removed from the cells, and for carrying out maintenance work at a height by an operator.

In these documents, the elevator comprises a load-bearing mast and a working platform that can be moved vertically with respect to the mast, guided by the mast. The mast is attached at two vertical ends to the floor and ceiling of the storage and retrieval system respectively. The mast is mounted at both vertical ends on rails along the corresponding circulation aisle, the rails being fixed respectively to the floor and ceiling of the storage and retrieval system, so as to allow translation of the elevator along the rails in the circulation aisle. By anchoring the elevator to the floor and ceiling, stability is ensured, enabling loads to be raised and lowered to heights of over ten meters. However, this is a cumbersome and inflexible solution, as it requires one elevator and floor and ceiling rails in all circulation aisles.

According to the Applicant's findings, the rails on the floor also constitute obstacles to the circulation of AGVs within the ASRS. Such an elevator is thus a maintenance solution that is not very compatible with the ASRS.

There is therefore a need to improve the flexibility and compactness of maintenance equipment for carrying out maintenance work at a height in a storage and retrieval system.

### Summary of the invention

This disclosure improves the situation.

A maintenance vehicle is proposed for a storage and retrieval system comprising storage racks. The storage racks comprise vertical uprights. The maintenance vehicle comprises a chassis able to move on a floor, a platform coupled to the chassis and intended to receive an operator, and a guardrail mounted on the platform. The maintenance vehicle comprises an ascent and descent system comprising an engagement member configured to cooperate with the uprights so as to drive the ascent and descent of the maintenance vehicle in a vertical direction.

The maintenance vehicle according to the present disclosure enables an operator to perform operations at height, in particular maintenance operations. The said maintenance vehicle offers the advantage of being mobile, flexible and space-saving and also to reach a higher height compared to a vehicle of maintenance according to the prior art. Indeed, the maintenance vehicle according to the present disclosure exhibits means of guidance and stabilization that ultimately provide better stability to the maintenance vehicle. Thus, it allows an operator to carry out operations at height in complete safety, while limiting the size of the maintenance vehicle, in terms of footprint and/or mass. Furthermore, such a maintenance vehicle does not require the establishment of additional infrastructures in the storage and retrieval system, for example guiding or anchoring infrastructures, on the floor or on the ceiling of the storage and retrieval system. In fact, the maintenance vehicle can move freely on a floor in a horizontal plane and vertically.

In the following, reference is made to a first direction, a second direction and a third direction. The first direction coincides with the vertical direction extending in particular vertically from the floor of the storage and retrieval system. The first direction is perpendicular to the second direction and the third direction. The second direction is perpendicular to the third direction. It is therefore understood that the second direction and the third direction form horizontal directions, here orthogonal to each other.

The features described in the following paragraphs can optionally be implemented independently or in combination with one another.

The storage racks may advantageously be arranged so as to form at least one circulation aisle between two respective storage racks. In this configuration, the maintenance vehicle may be able to circulate on the floor in the at least one circulation aisle and to engage with the uprights facing the respective circulation aisle.

Advantageously, the engagement member comprises gear wheels, each gear wheel being configured to mesh with a climbing element extending along the height of an upright. In particular, the climbing element may consist of a gear rack or a roller chain. The meshing of the gear wheels on the gear rack therefore makes it possible to secure the ascent and descent of the maintenance vehicle along the uprights.

The engagement member, in particular the gear wheels of the maintenance vehicle, can advantageously be driven by one or more motors. This feature ensures motorized ascent and descent of the maintenance vehicle, and thus facilitates use of the maintenance vehicle for the operator. In addition, the use of one or more motors makes it easier to regulate the ascent and descent speed of the maintenance vehicle.

In particular, the maintenance vehicle can comprise a man-machine interface configured to enable control of the one or more motors by an operator. The man-machine interface may take the form of electrical control buttons, a computer screen or a smartphone, via which the operator can control the one or more motors.

Advantageously, the ascent and descent system can comprise a manual ascent and descent mechanism which is configured to enable the engagement member to be driven, in particular the gearwheels to be driven on the climbing elements, when the manual ascent and descent mechanism is actuated by an operator. The manual ascent and descent mechanism preferably comprises a crank. The operator can then operate the crank to raise or lower the maintenance vehicle.

The ascent and descent system may comprise a transmission.

Advantageously, this transmission can be used to adapt the ascent and descent speed of the maintenance vehicle.

When the ascent and descent system comprises a manual ascent and descent mechanism, the transmission can advantageously comprise a reduction gear mechanically arranged between the manual ascent and descent mechanism, in particular the crank, and the engagement member, in particular the gearwheels. The reduction gear is preferably irreversible.

When the ascent and descent system comprises both one or more motors and a manual ascent and descent mechanism, the transmission can advantageously selectively enable drive by the one or more motors, or by the manual ascent and descent mechanism. This feature enables the operator to switch between a motorized drive and a manual drive when appropriate. In particular, a motorized drive may be more suitable for faster ascent of the maintenance vehicle, and a manual drive may be more suitable for more precise height adjustment of the maintenance vehicle.

The engagement member is preferably configured to cooperate with at least six uprights, for example six, eight, ten or twelve uprights. This feature ensures that the engagement member engages with a sufficient number of uprights to maintain the stability of the maintenance vehicle during operation. This being said, the maintenance vehicle is not limited to a specific number of uprights.

It is to the credit of the Applicant that it has thought of using, as the chassis of the maintenance vehicle, a chassis which can typically be the chassis of an AGV. In this way, the AGV's functions of moving freely in the circulation aisles in a horizontal plane and vertically between the storage racks are taken over.

The chassis can be motorized or not motorized to move on the floor.

The maintenance vehicle advantageously comprises wheels, preferably freewheels, mounted on the chassis so as to allow the chassis to move on the floor. These wheels make it easier for the maintenance vehicle to move on the floor.

Advantageously, the maintenance vehicle is foldable. In particular, the guardrail can be folded onto the platform. The platform can be folded. This feature has the advantage of improving the compactness of the maintenance vehicle when not in use.

In addition, the maintenance vehicle may comprise a safety mechanism configured to prevent tilting of the platform in the vertical direction. For example, the safety mechanism may comprise a mechanical locking member to prevent tilting of the platform in the vertical direction.

The maintenance vehicle advantageously comprises a mechanism for deploying and retracting the engagement member, with respect to the chassis, from a retracted configuration of the engagement member where the maintenance vehicle takes up less space, to a deployed configuration of the engagement member configured to engage with the uprights. This feature facilitates the movement of the maintenance vehicle in the circulation aisle when the engagement member is in the retracted configuration and makes it easier to engage the engagement member with the uprights.

In another aspect, a storage and retrieval system is proposed comprising storage racks with consecutive columns of cells. In particular, each of the cells defines a storage location intended to receive one or more articles, for example arranged in a bin. The storage racks comprise vertical uprights. The storage and retrieval system further comprises a maintenance vehicle as previously described configured to circulate on a floor and to engage with the uprights of the storage racks so as to enable the maintenance vehicle to ascend and descend in the vertical direction.

Advantageously, the storage racks are arranged so as to form at least one circulation aisle between two respective storage racks. In this configuration, the maintenance vehicle may be able to circulate on the floor in the at least one circulation aisle and to engage with the uprights facing the respective circulation aisle. Each of the at least one circulation aisle, between two respective storage racks, is formed by a plurality of consecutive vertical circulation columns, each vertical circulation column giving access to at least one respective cell column. The storage and retrieval system also comprises at least one AGV, also referred to as an automated guided vehicle, configured to ascend and descend in one of the vertical circulation columns. Each of the at least one AGV comprises climbing means configured to engage with climbing elements of the uprights of the storage racks facing said vertical circulation column. In particular, the engagement member of the maintenance vehicle is configured to cooperate with said climbing elements of the uprights.

In particular, the maintenance vehicle is configured to enable an operator to carry out operations at height, in particular assembly and/or maintenance operations, and especially AGV maintenance. In fact, the said AGV may, during operation, find itself blocked at height in a vertical circulation column, for example following a breakdown. The AGV may for instance find itself at an angle, braced against the climbing elements, i.e. the AGV chassis is inclined with respect to a horizontal plane perpendicular to the first direction. The maintenance vehicle enables an operator to work at height to unblock the AGV. Moreover, the maintenance vehicle does not require any ground infrastructure, such as guidance or anchoring systems, thus facilitating the circulation of AGVs in the circulation aisles, and even under the storage racks if necessary. This being said, the present disclosure is not limited to a maintenance vehicle capable of carrying out said operations, as the present vehicle makes possible to handle any type of maintenance operations (not only limited to issues concerning AGVs blocked in the storage racks) such as a bin or a tray being stuck in the rack, issues related directly to the rack itself or concerning the sprinkling system for instance.

According to another aspect, a maintenance method for a storage and retrieval system as previously described is proposed. The maintenance method comprises:
- moving the maintenance vehicle in said at least one circulation aisle to a vertical circulation column consecutive to a vertical circulation column in which an AGV is blocked,
- coupling the engagement member of the ascent and descent system with uprights facing the respective circulation aisle,
- elevate the platform to the height of the blocked AGV by driving the engagement member.

The maintenance method according to the present disclosure therefore offers the advantage of being easily implemented while ensuring the safety of an operator when working at height. Unblocking the AGV in one step can be carried out manually by an operator. It is also possible to equip the platform with a gripper, in particular a robotic gripper, for unblocking and seizing the automated guided vehicle.

### List of figures

Further features, details and advantages will become apparent from the detailed description below, and from an analysis of the appended drawings, on which:
[Fig. 1] schematically illustrates a view of an example of a storage and retrieval system.
[Fig. 2] schematically illustrates a view of an example of a storage rack according to an embodiment.
[Fig. 3] shows a schematic diagram of a maintenance vehicle according to an embodiment.
[Fig. 4] schematically illustrates a top view along a first vertical Z direction of examples of storage racks and the maintenance vehicle according to an embodiment.
[Fig. 5] schematically illustrates a side view of the maintenance vehicle according to an embodiment.
[Fig. 6] schematically illustrates steps of a maintenance method according to an embodiment.

### Detailed description of the invention

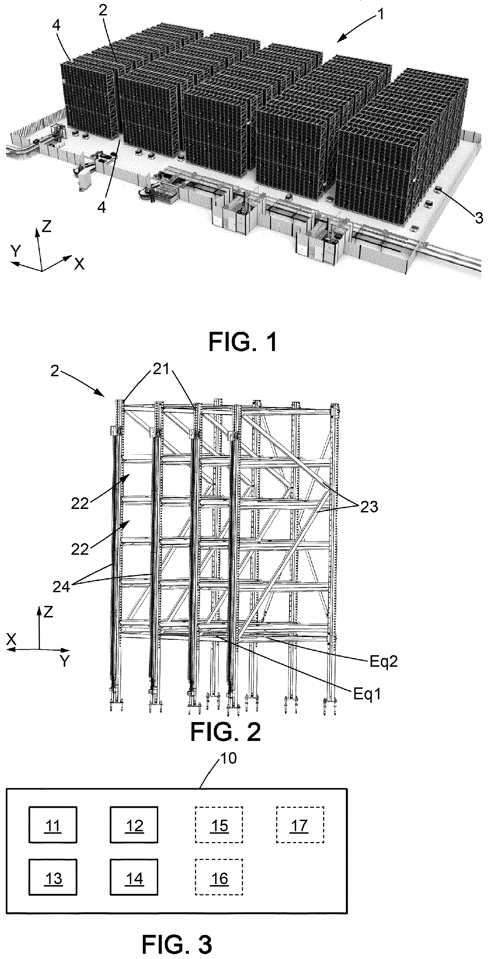

Reference is now made to Figure 1 schematically representing an example of a storage and retrieval system 1, for example in a warehouse, according to one aspect of the present disclosure. According to another aspect, the present disclosure relates to a maintenance vehicle, in particular for such a storage and retrieval system 1.

In the following description, reference is made to a first Z direction, also referred to as the vertical Z direction, a second X direction and a third Y direction. In the examples shown, the first Z direction coincides with a vertical direction extending in particular vertically from the floor of the storage and retrieval system 1. The first Z direction is perpendicular to the second X direction and the third Y direction. The second direction X is perpendicular to the third direction Y. It is therefore understood that the second direction X and the third direction Y form horizontal directions, here orthogonal to each other.

In particular, the storage and retrieval system 1 comprises at least two, and in particular several, storage racks 2, which may also be referred to as "shelving", designed to receive articles for storage. The storage racks 2 advantageously extend in height along the first Z direction.

Figure 2 illustrates such a storage rack 2. Each of the storage racks 2 comprises consecutive columns of cells 22, the cells of each of the columns of cells 22 being superimposed along the height. In particular, each of the cells 22 defines a storage location intended to receive one or more articles, for example arranged in a bin. These articles are then combined to form orders. More precisely, the consecutive columns of cells 22 in each of the storage racks 2 extend along the third direction Y. Access to a cell 22 to place or remove an article and/or a bin can be made from at least one side of the storage rack along the second direction X.

Each of the storage racks 2 has vertical uprights 21. The upright 21 comprises a straight post extending in the first Z direction. A lower end of the post is configured to be fixed to the floor. In particular, the storage rack 2 comprises at least two rows of uprights, in particular two rows of uprights, along the third direction Y. The uprights of each row of uprights are notably evenly spaced along the third direction Y. Each upright 21 of one of the rows of uprights is aligned with an upright 21 of an upright of the other one of the rows of uprights in the second direction X. Each cell 22 is delimited along the third direction Y by two successive uprights 21 of the same row of uprights. Each cell 22 can also be delimited in the second direction X by at least two uprights 21 in the second direction X of one and another row of uprights 21 respectively. In the example shown in Figure 2, the storage rack 2 comprises two rows of uprights 21 in the third direction Y. The uprights 21 are held parallel to each other in the first direction Z by spacers 23.

For each column of cells 22, the superimposed cells can be defined by pairs of superimposed fastening interfaces. Each pair of fastening interfaces comprises a first fastening interface Eq1, integral with at least two uprights 21 in the second direction X, and a second fastening interface Eq2, integral with at least two other uprights 21 in the second direction X, the at least two uprights 21 integral with the first fastening interface Eq1 being offset in the third direction Y from the at least two uprights 21 integral with the second fastening interface Eq2. The first fastening interface Eq1 and the second fastening interface Eq2 comprise support portions, projecting towards each other, for supporting a bin, or more generally a container, in said cell 22.

The storage racks 2 may be arranged so as to form at least one circulation aisle 4 between respective storage racks 2, in particular aligned with one another. More precisely, as illustrated in Figure 1, at least one circulation aisle 4, in particular several aisles, extends in the third direction Y between two respective storage racks 2. The two storage racks 2 are advantageously opposite each other and aligned with each other along the third direction Y. At least one circulation aisle, in particular several circulation aisles, extend in the second direction X between two respective rows of storage racks 2. Each row of storage racks 2 comprises a succession, along the second direction X, of at least two storage racks 2 spaced from one another by circulation aisles extending along the third direction Y. In particular, the rows of storage racks 2 are aligned with one another.

This previously described arrangement of the storage and retrieval system, with circulation aisles extending in the second X and third Y directions respectively, facilitates circulation within the storage and retrieval system, and the placement and retrieval of bins or containers in and out the cells in a horizontal direction, in this case the second X direction.

Each of the at least one circulation aisle 4 between two respective storage racks 2, which extends in particular in the third direction Y, is formed by a plurality of consecutive vertical circulation columns. Each of the vertical circulation columns serves at least one respective column of cells, for example one column of cells of one of said two storage racks, or two columns of cells of one and the other of both storage racks respectively.

The storage and retrieval system 1 can also comprise at least one AGV 3, preferably a plurality of AGVs, the acronym AGV standing for "Automated Guided Vehicle". The AGV is also referred to as an automated guided vehicle. The automated guided vehicle 3 is configured to ascend or descend in one of the vertical circulation columns. To this end, each of the at least one automated guided vehicle 3 comprises climbing means configured to engage with climbing elements 24 of the uprights 21 of the storage racks 2 facing said vertical circulation column 41. The climbing elements 24 extend in particular along the height of the upright.

More specifically, the automated guided vehicle 3 may comprise a chassis and climbing means on both sides of the chassis along the second direction X. The climbing means are arranged, for example, at the four corners of the chassis and between the chassis and one of the storage racks 2 along the second direction X. The climbing means therefore enable the vehicle to move along the storage racks 2 in the first direction Z, typically by cooperating with the climbing elements 24 of the uprights 21 in the first direction Z.

The climbing means may comprise at least one motorized gear wheel, preferably several motorized wheels, typically at the four corners of the chassis of the automated guided vehicle. The gear wheel or each one of the gear wheels is configured to engage with one of the climbing elements 24, which may typically be a gear rack or a roller chain, extending along the height of the respective upright 21. The automated guided vehicle can thus access one of the cells of the column of cells accessible from the respective vertical circulation column in order to place or retrieve a container or bin from the cell along the second direction X. For this purpose, the automated guided vehicle may comprise a gripping device comprising a support movable with respect to the chassis which is configured to move from a retracted position for loading a bin onto the chassis and in which the support is housed on the chassis, and up to a deployed position in which the movable support extends cantilever from the chassis for unloading the bin and as for example known per se from the document EP3638607A1 of the present Applicant.

The storage and retrieval system 1 further comprises at least one maintenance vehicle 10 configured to move on a floor, and to engage with storage rack uprights 21 so as to enable the maintenance vehicle 10 to ascend and descend in the first Z direction.

In a configuration in which the storage racks are arranged so as to form the at least one circulation aisle 4 between two respective storage racks, the maintenance vehicle may be able to circulate on the floor in the at least one circulation aisle 4 and to engage with the uprights facing the respective circulation aisle 4.

In particular, the maintenance vehicle is configured to enable operations to be carried out at a height by an operator, in particular assembly and/or maintenance operations, and especially the maintenance of an automated guided vehicle. In fact, the automated guided vehicle may, during operation, find itself blocked at height in a vertical circulation column, for example following a breakdown. For example, the automated guided vehicle may find itself at an angle, braced against the climbing elements, i.e. the vehicle chassis is tilted with respect to a horizontal plane perpendicular to the first Z direction. The maintenance vehicle 10 allows an operator to intervene at height in order to unblock the automated guided vehicle.

This being said, the present disclosure is not limited to a maintenance vehicle capable of carrying out said operations, as the present vehicle makes possible to handle any type of maintenance operations (not only limited to issues concerning AGVs blocked in the storage racks) such as a bin or a tray being stuck in the rack, issues related directly to the rack itself or concerning the sprinkling system for instance.

Reference is now made to Figures 3, 4 and 5. In particular, figure 3 schematically represents such a maintenance vehicle 10. The maintenance vehicle 10 comprises a chassis 11 able to move on a floor, a platform 12 coupled to the chassis 11 and intended to receive an operator, and a guardrail 13 mounted on the platform 12. The chassis 11 may or may not be motorized. The guardrail 13 is notably configured to ensure the safety of the operator on the platform and to limit the risk of the latter falling.

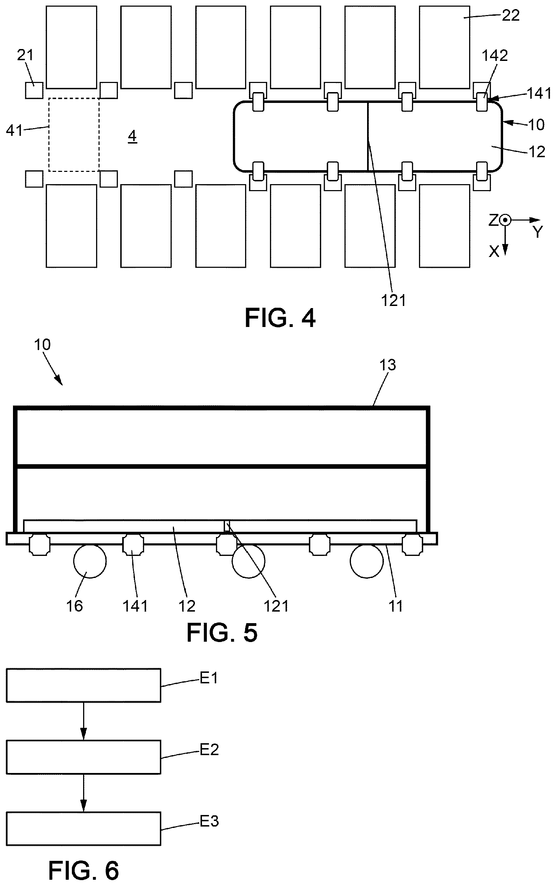

With reference to figure 4, the maintenance vehicle comprises an ascent and descent system 14 comprising an engagement member 141 configured to cooperate with the uprights 21 so as to drive ascent and descent of the maintenance vehicle 10 in the vertical direction Z.

In particular, the engagement member 141 of the maintenance vehicle 10 is configured to cooperate with the climbing elements 24 of the uprights 21.

In addition, advantageously, the climbing means of one of the at least one automated guided vehicle 3 arranged in a vertical circulation column 41 and the engagement member 141 of the maintenance vehicle 10 guided in at least one vertical circulation column 41 adjoining the vertical circulation column 41 in which the automated guided vehicle 3 is arranged, are configured to cooperate simultaneously with the same upright 21 of one of the storage racks 2 without hindering the movement, in the direction of the upright 21, of the automated guided vehicle 3 or the maintenance vehicle 10 respectively with respect to said same upright 21. This feature makes it possible to bring the maintenance vehicle as close as possible to a blocked automated guided vehicle for maintenance.

The maintenance vehicle 10 according to the present disclosure enables an operator to perform operations at height, in particular maintenance operations. The said maintenance vehicle 10 offers the advantage of being mobile, flexible and space-saving and also to reach a higher height compared to a vehicle of maintenance according to the prior art. Indeed, the maintenance vehicle according to the present disclosure exhibits means of guidance and stabilization that ultimately provide better stability to the maintenance vehicle. Thus, it allows an operator to carry out operations at height in complete safety, while limiting the size of the maintenance vehicle, in terms of footprint and/or mass. Furthermore, such a maintenance vehicle does not require the establishment of additional infrastructures in the storage and retrieval system, for example guiding or anchoring infrastructures, on the floor or on the ceiling of the storage and retrieval system. In fact, the maintenance vehicle 10 can move freely on a floor in a horizontal plane and vertically.

Advantageously, the engagement member 141 comprises gearwheels 142, each gearwheel 142 being configured to mesh with one of the climbing elements 24. The meshing of the gearwheels on the gear rack therefore makes it possible to secure the ascent and descent of the maintenance vehicle along the uprights.

In at least one embodiment, the engagement member 141, in particular the gearwheels 142 of the maintenance vehicle 10, can advantageously be driven by one or more motors. This feature ensures motorized ascent and descent of the maintenance vehicle, and thus facilitates use of the maintenance vehicle for the operator. In addition, the use of one or more motors makes it easier to regulate the ascent and descent speed of the maintenance vehicle.

In particular, the maintenance vehicle 10 may comprise a man-machine interface 15 configured to enable control of the one or more motors by an operator. The man-machine interface may take the form of electrical control buttons, a computer screen or a smartphone, via which the operator can control the one or more motors. The interface can be attached to the maintenance vehicle, for example to the guardrail, with a wired connection to the electronics controlling the one or more motors, or it can include a communication module enabling wireless control of the one or more motors.

In addition, the ascent and descent system 14 may comprise a manual ascent and descent mechanism which is configured to enable the engagement member 141 to be driven, in particular the gearwheels 142 to be driven on the climbing elements 24, when the manual ascent and descent mechanism is actuated by an operator. The manual ascent and descent mechanism preferably comprises a crank. The operator can then operate the crank to raise or lower the maintenance vehicle.

The ascent and descent system may comprise a transmission.

Advantageously, this transmission can be used to adapt the ascent and descent speed of the maintenance vehicle.

When the ascent and descent system comprises a manual ascent and descent mechanism, the transmission can advantageously comprise a reduction gear mechanically arranged between the manual ascent and descent mechanism, in particular the crank, and the engagement member, in particular the gearwheels. The reduction gear is preferably irreversible.

When the ascent and descent system 14 comprises both one or more motors and a manual ascent and descent mechanism, the transmission can advantageously selectively enable drive by the one or more motors, or by the manual ascent and descent mechanism. This feature enables the operator to switch between a motorized drive and a manual drive when appropriate. In particular, a motorized drive may be more suitable for faster ascent of the maintenance vehicle, and a manual drive may be more suitable for more precise height adjustment of the maintenance vehicle.

The engagement member 141 is preferably configured to cooperate with at least six uprights 21, for example six, eight, ten or twelve uprights 21. For example, Figure 4 shows a configuration in which the engagement member 141 is configured to cooperate with eight uprights, i.e. four uprights respectively on both sides of the circulation aisle. This feature ensures that the engagement member engages with a sufficient number of uprights to maintain the stability of the maintenance vehicle during operation. This being said, the maintenance vehicle is not limited to a specific number of uprights.

The maintenance vehicle 10 advantageously comprises wheels 16, preferably freewheels, mounted on the chassis 11 so as to allow the chassis 11 to move on the floor. These wheels make it easier for the maintenance vehicle to move on the floor. The chassis 11 can then be pushed or pulled by an operator for its circulation on the floor.

With reference to Figures 4 and 5, the maintenance vehicle 10 is advantageously foldable. This feature has the advantage of improving the compactness of the maintenance vehicle when not in use.

In particular, the guardrail 13 can be folded onto platform 12.

The platform 12 can also be folded, for example onto itself, about an axis 121. The axis 121 is preferably oriented in a direction perpendicular to a larger dimension of the platform 12.

In addition, the maintenance vehicle 10 may comprise a safety mechanism 17 configured to prevent tilting of the platform 12 in the vertical direction Z. For example, the safety mechanism may comprise a mechanical locking member to prevent tilting of the platform in the vertical direction.

The maintenance vehicle 10 advantageously comprises a mechanism for deploying and retracting the engagement member 141, with respect to the chassis 11, from a retracted configuration of the engagement member where the maintenance vehicle takes up less space, to a deployed configuration of the engagement member 141 configured to engage with the uprights 21. This feature facilitates the movement of the maintenance vehicle in the circulation aisle when the engagement member is in the retracted configuration, and makes it easier to engage the engagement member with the uprights.

Figure 6 schematically illustrates a maintenance method, according to one aspect of the present disclosure, of a storage and retrieval system 1 when an automated guided vehicle is blocked at height in a vertical circulation column of the storage and retrieval system 1.

Generally speaking, the maintenance method comprises:
- moving E1 the maintenance vehicle 10 in said at least one circulation aisle 4 to a vertical circulation column 41 consecutive to a vertical circulation column 41 in which an automated guided vehicle 3 is blocked,
- coupling E2 the engagement member 141 of the ascent and descent system 14 with uprights 21 facing the respective circulation aisle 4,
- elevate E3 the platform 12 to the height of the blocked automated guided vehicle 3 by driving the engagement member 141.

The maintenance method according to the present disclosure therefore offers the advantage of being easily implemented while ensuring the safety of an operator when working at height. Unblocking the automated guided vehicle in one step can be carried out manually by an operator. It is also possible to equip the platform with a gripper, in particular a robotic gripper, for unblocking and seizing the automated guided vehicle.

## Claims

1. A maintenance vehicle (10) for a storage and retrieval system (1) comprising storage racks (2), the storage racks (2) comprising vertical uprights (21),
wherein the maintenance vehicle (10) comprises :
- a chassis (11) able to move on a floor,
- a platform (12) coupled to the chassis (11) and intended to receive an operator,
- a guardrail (13) mounted on the platform (12),
- an ascent and descent system (14) comprising an engagement member (141) configured to cooperate with the uprights (21) so as to drive the ascent and descent of the maintenance vehicle (10) in a vertical direction (Z).

2. The maintenance vehicle (10) as claimed in claim 1, wherein the engagement member (141) comprises gear wheels (142), each gear wheel (142) being configured to mesh with a climbing element (24) extending along the height of an upright (21).

3. The maintenance vehicle (10) according to one of claims 1 or 2, wherein the engagement member (141), in particular the gearwheels (142) of the maintenance vehicle (10) according to claim 2, is driven by one or more motors.

4. The maintenance vehicle (10) according to claim 3, comprising a man-machine interface (15) configured to enable control of the one or more motors by an operator.

5. The maintenance vehicle (10) according to one of the preceding claims, wherein the ascent and descent system (14) comprises a manual ascent and descent mechanism which is configured to enable the engagement member (141) to be driven, in particular the gear wheels (142) according to claim 2 to be driven on the climbing elements (24), when the manual ascent and descent mechanism is actuated by an operator, the manual ascent and descent mechanism preferably comprising a crank.

6. The maintenance vehicle (10) according to claims 3 or 4 combined with claim 5, in which the ascent and descent system (14) comprises a transmission selectively enabling drive by the one or more motors, or by the manual ascent and descent mechanism.

7. The maintenance vehicle (10) according to one of the preceding claims, in which the engagement member (141) is configured to cooperate with at least six uprights (21), for example six, eight, ten or twelve uprights (21).

8. The maintenance vehicle (10) according to one of the preceding claims, comprising wheels (16), preferably freewheels, mounted on the chassis (11) so as to allow the chassis (11) to move on the floor.

9. The maintenance vehicle (10) according to one of the preceding claims, wherein the maintenance vehicle (10) is foldable, in particular the guardrail (13) is foldable onto the platform (12) and the platform (12) is foldable.

10. The maintenance vehicle (10) according to one of the preceding claims, comprising a safety mechanism (17) configured to prevent tilting of the platform (12) in the vertical direction (Z).

11. The maintenance vehicle (10) according to one of the preceding claims, comprising a mechanism for deploying and retracting the engagement member (141), with respect to the chassis (11), from a retracted configuration where the maintenance vehicle (10) takes up less space, to a deployed configuration of the engagement member (141) configured to engage with the uprights (21).

12. Storage and retrieval system (1) comprising storage racks (2) comprising consecutive columns of cells, , the storage racks (2) comprising vertical uprights (21),
the storage and retrieval system (1) further comprising a maintenance vehicle (10) according to one of the preceding claims configured to circulate on a floor and to engage with the uprights (21) of the storage racks so as to enable the maintenance vehicle (10) to ascend and descend in the vertical direction (Z).

13. The storage and retrieval system (1) according to the preceding claim, wherein the storage racks (2) are arranged so as to form at least one circulation aisle (4) between two respective storage racks (2), each of the at least one circulation aisle (4), between two respective storage racks (2), being formed of a plurality of consecutive vertical circulation columns (41), each vertical circulation column (41) giving access to at least one respective cell column, wherein the storage and retrieval system (1) further comprises at least one automated guided vehicle (3) configured to ascend and descend in one of the vertical circulation columns (41), each of the at least one automated guided vehicle (3) comprising climbing means configured to engage with climbing elements (24) of the uprights (21) of the storage racks (2) facing said vertical circulation column (41), the engagement member (141) of the maintenance vehicle (10) being configured to cooperate with said climbing elements (24) of the uprights (21).

14. The storage and retrieval system (1) according to the preceding claim, in which the climbing means of one of the at least one automated guided vehicle (3) arranged in a vertical circulation column (41) and the engagement member (141) of the maintenance vehicle (10) guided in at least one vertical circulation column (41) adjoining the vertical circulation column (41) in which the automated guided vehicle (3) is arranged, are configured to cooperate simultaneously with the same upright (21) of one of the storage racks (2) without hindering the movement, in the direction of the upright (21), of the automated guided vehicle (3) or the maintenance vehicle (10) respectively with respect to said same upright (21).

15. A maintenance method of maintaining a storage and retrieval system (1) according to one of claims 13 or 14, the maintenance method comprising:
- moving (E1) the maintenance vehicle (10) in said at least one circulation aisle (4) to a vertical circulation column (41) consecutive to a vertical circulation column (41) in which an automated guided vehicle (3) is blocked,
- coupling (E2) the engagement member (141) of the ascent and descent system (14) with uprights (21) facing the respective circulation aisle (4),
- elevate (E3) the platform (12) to the height of the blocked automated guided vehicle (3) by driving the engagement member (141).
